# EUROPEAN PATENT APPLICATION

(11) **EP 0 903 451 A2**
(43) Date of publication of application: **24.03.1999**
(21) Application number: 98203111.4
(22) Date of filing: 17.09.1998
(51) Int. Cl.: E04F 15/04, C09K 3/10

(54) **Floor part, method for making such a floor part and device used thereby**

(30) Priority: 22.09.1997 BE 9700767
(71) Applicant: Unilin Beheer B.V., 2913 LV Nieuwerkerk aan de IJssel (NL)
(72) Inventor: Thiers, Barnard, 8780 Oostrozebeke (BE)
(74) Representative: Donné, Eddy

(57) **Abstract**

Floor part, in particular a floor panel for forming a parquet floor or such, characterized in that it is treated with a sealing agent (6) on one or several sides (2-32-33-34).

## Description

The present invention concerns a floor part, in particular a floor panel for forming a parquet floor or such.

In particular, the invention concerns laminate parquet.

The invention concerns a floor part with a core of wood fibres or wood chips, a core of MDF or HDF, or a core of waterproof MDF or HDF which has been glued together, with an improved moisture resistance.

To this aim, the invention concerns a floor part, in particular a floor panel for forming a parquet floor or such, characterized in that it has been treated with a sealing agent on one or several sides. Thus is obtained that the sides concerned absorb no or less moisture, so that all the disadvantages related to moisture absorption are excluded or at least reduced.

Preferably, a phenylmethane is used as a sealing agent according to the invention, or a sealing agent which at least contains a phenylmethane, in particular di-isocyanate diphenylmethane.

According to the most preferred embodiment, the sealing agent will consist of modified di-isocyanate diphenylmethane or a product on the basis thereof.

According to the invention, the above-mentioned products are particularly advantageous when they are used for floor parts whose core consists of MDF or HDF, either or not glued together in a waterproof manner. In particular in the case of floor parts with a core of MDF or HDF is obtained that the above-mentioned products can easily penetrate in the surface of the core and bring about a good sealing of the pores after curing, without hereby causing a swelling due to the absorption of the sealing agent on the side.

The above-mentioned products are further characterized in that they can be applied in a fluid form as well as in the form of an aerosol on the surfaces to be treated.

The invention also concerns a method for making such a floor part, whereby the floor part is first composed and whereby one or several sides thereof are subsequently treated with sealing agent, characterized in that at least a part of the sealing agent is applied by means of at least one needle-shaped feed nozzle. The use of such a needle-shaped feed nozzle, whereby the binding agent is pressed out in liquid form via a duct, offers the advantage that the binding agent can be applied very precisely on the side and can be dosed very precisely.

Preferably, the sealing agent will be provided on the floor part at least near the top edge and possibly near the bottom edge of the side by means of a needle-shaped feed nozzle, whereby a lining of sealing agent is formed so to say.

According to the preferred embodiment, the parts of the surface of the sides concerned, onto which no sealing agent has been applied or will be applied by means of the needle-shaped feed nozzle, needle-shaped feed nozzles respectively, will be treated by spraying sealing agent onto them by means of one or several sprinkler heads, possibly with a slight overlap of the part, parts respectively, which are treated by means of the needle-shaped feed nozzle, needle-shaped feed nozzles respectively.

According to the most preferred embodiment, the needle-shaped feed nozzles will be exclusively used to form a lining, whereas the rest of the surface will be treated by spraying the sealing agent onto it by means of sprinkling or atomizing.
The invention further also concerns a method for making a floor part, whereby the floor part is first composed and whereby one or several sides thereof are subsequently treated with sealing agent, characterized in that the sealing agent, after it has been applied, is driven in the material, in particular the core material of the floor partt. As a result, the sealing agent is dispersed so to say, so that a particularly even and good distribution is obtained. Practically, this is realized according to the invention by spraying a gas under pressure, in particular compressed air, on the sides, preferably by means of one or several nozzles.

According to the invention, this technique can be applied in combination with any technique whatsoever for applying sealing agent on the sides.

In the case where a part of the side is first provided with sealing agent via one or several needle-shaped feed nozzles and this side is then further treated by spraying sealing agent on the side in a second stage, the above-mentioned technique, whereby the sealing agent is driven in the material of the floor part by means of a gas under pressure, is preferably applied immediately after the treatment with the needle-shaped feed nozzles, in other words before the sprinkling. The amount of sealing agent provided by means of the needle-shaped feed nozzles is relatively thick, so that especially in this place it is desirable to apply the above-mentioned dispersion technique while the sealing agent is still optimally liquid.

The invention also concerns floor parts which are obtained according to the above-described methods. In the latter case, this implies that the floor part has one or several sides which are provided with a driven and/or dispersed layer of sealing agent over their entire surface or a part thereof.

Finally, the invention also concerns a device for realizing the above-described method, in particular for treating the sides with sealing agent, whose structure will become clear from the following description.

In order to better explain the characteristics of the invention, the following preferred embodiment of the method is described as an example only without being limitative in any way, with reference to the accompanying drawings, in which:
figure 1 schematically represents a top view of a device applying the method according to the invention;
figures 2 and 3 represent local sections according to lines II-II and III-III in figure 1 to a larger scale;
figure 4 shows another section of a floor part that is treated according to the method of the invention, to a larger scale;
figure 5 shows a section according to line V-V in figure 1 to a larger scale.

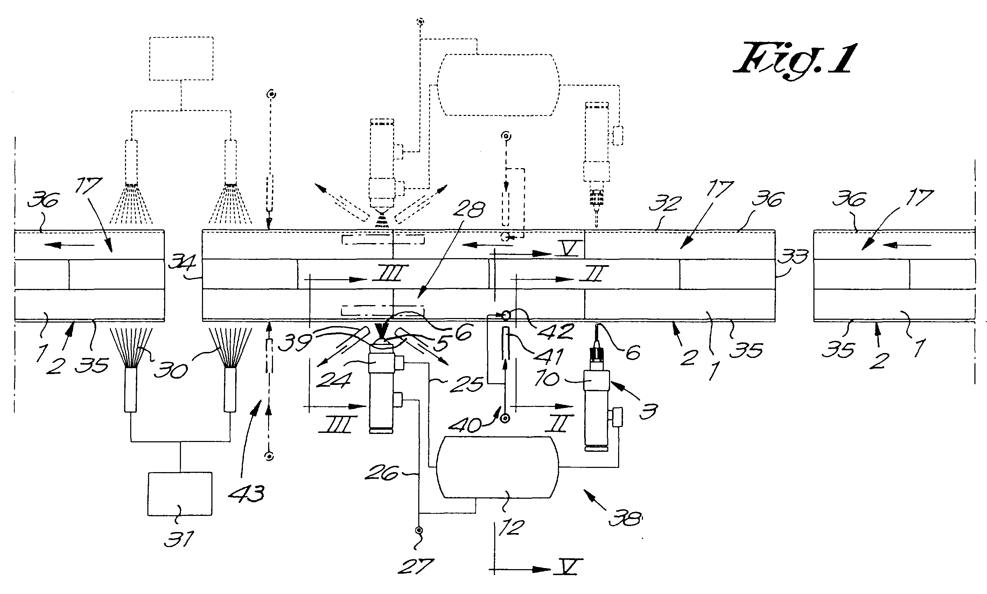

Figures 1 to 3 show how the floor parts 1 are moved with a side 2 along needle-shaped feed nozzles 3-4 and a sprinkler head 5 so as to provide a sealing agent 6 on this side 2.

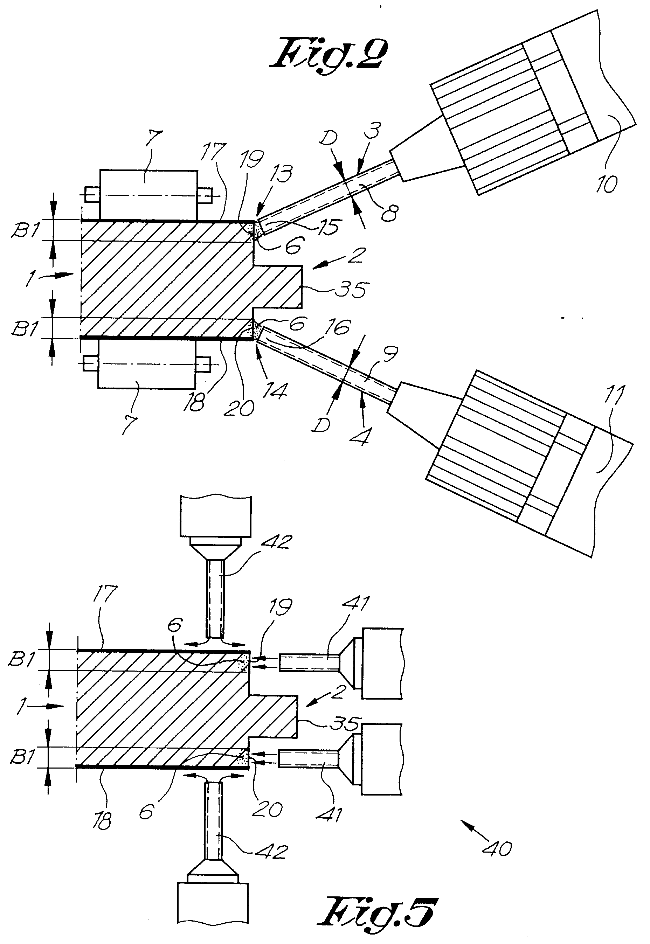

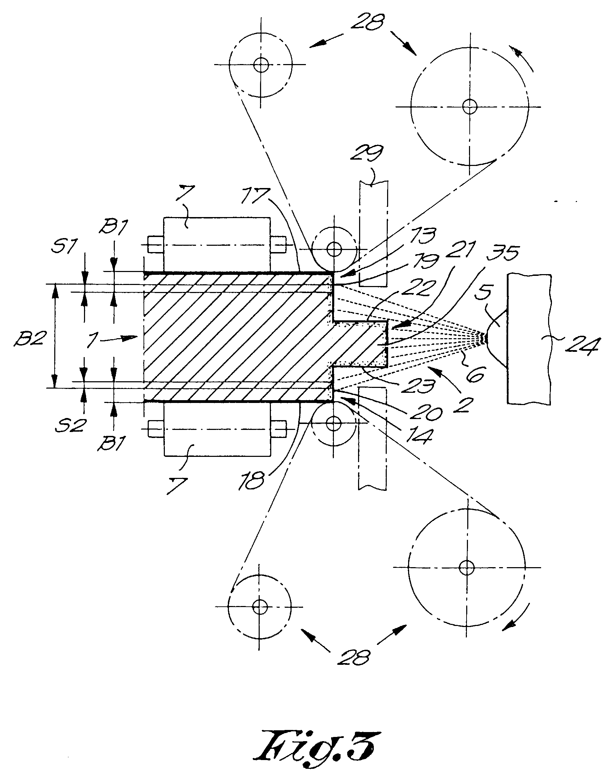

The floor parts 1 are hereby moved in a longitudinal direction by means of transport means and guiding means, of which are merely represented a number of guide rollers 7 in figures 2 and 3.

The needle-shaped feed nozzles 3-4 actually consist of hollow needles with ducts 8-9 through which the sealing agent 6 is supplied in liquid form under a certain pressure and is deposited on the side 2. These ducts 8-9 are connected to a reservoir 12 containing sealing agent 6 via valves 10-11.

The feed nozzle 3 is used to deposit sealing agent 6 near the top edge 13 on the side 2, whereas the feed nozzle 4 is used to deposit sealing agent 6 near the bottom edge 14. It is clear that thus is obtained a lining of sealing agent 6.

In practice, the needle-shaped feed nozzles 3-4 will be provided with outflow openings 15-16 whose diameter D is preferably smaller than or equal to 2 mm, or better still 1.6 mm. The use of such small outflow openings 15-16 offers the advantage that a very fine lining can be made and that the amount of fluid deposited on the side 2 can be kept very small, so that a quick drying is obtained. The latter is particularly important when the floor parts 1 have to be packed immediately following this treatment, whereby the packaging has to be prevented from sticking to the floor parts 1. The fine lining also has for a result that no sealing agent ends up on the top side 17 or bottom side 18 of the floor parts 1, so that floor parts 1 piled on top of one another can never stick together.

According to the invention, needle-shaped feed nozzles 3-4 can hereby be used with an outflow opening 15-16 having a flattened section, in particular in the shape of an ellipse, oval or such. Such a flattened shape offers the advantage that a relatively wide surface is covered and that the sealing agent is spread out relatively evenly. In particular, this results in that the flow rate in the middle of the outflow openings 15-16 is practically equal to the flow rate on the sides of the outflow openings 15-16.

It is clear, however, that other shapes of outflow openings 15-16 are not excluded, for example a round shape.

It should be noted that the width B1 of every part 19-20 of the surface of the side 2 which is treated via the respective feed nozzles 3-4 is preferably limited to maximally 2 mm.

As represented in figures 1 and 3, the part 21 situated between the parts 19 and 20, is treated with sealing agent 6 by spraying this agent on said part 21 by means of the sprinkler head 5. The sprayed or atomized surface may have an average width B2 which is selected such that this surface overlaps with the above-mentioned parts 19 and 20 on the edges. This overlap is schematically represented in the figures with S1 and S2.

Preferably, a sprinkler head 5 is used with which the sealing agent 6 is atomized in the form of an aerosol. Thus is obtained a fine and even distribution of the sealing agent 6, so that it will dry very quickly. The atomization also has for a result that the sealing agent 6 spreads more or less and also ends up in parts, for example the parts 22 and 23 represented in figure 3, which are not immediately situated within the range of the outlet of the sprinkler head 5.

The sprinkler head 5 is operated by means of a valve 24. The sealing agent 6 is supplied via a pipe 25. The pipe 26 which is connected to a compressed air source 27 makes sure that compressed air is supplied to the sprinkler head 5 so as to form the aerosol. It is clear, however, that a sprinkling operation without an air supply can also be provided for.

The valves 10-11-24 can be operated in different ways by means of sensors or switches, preferably in such a way that every side concerned is provided with sealing agent 6 over its entire length.

As is schematically represented in figure 3, a screening 28 can be provided for during the spraying or atomizing, preferably both on the top side and on the bottom side, so as to prevent that any product ends up on the top side 17 and/or bottom side 18. As is represented, this screening 28 may consist of a paper strip or such that is moved along the top edge 13 or bottom edge 14.

According to a variant which is also schematically represented in figure 3, also a fixed mask 29 can be used.

After the sealing agent 6 has been provided, the side 2 concerned can be subjected to a drying process, whereby the floor parts 1, as is schematically represented in figure 1, are carried through a hot air stream 30 produced by an appropriate device 31.

It is clear that the invention is not limited to the treatment of one side 2. On the contrary, preferably more sides 2-32-33-34 will be treated in such a way, regardless of whether it concerns a side with a tooth 35, a side with a groove 36 or a side having neither of these.

As is schematically represented in figure 1, the side 32 can be treated by means of a similar device as described above. The short sides 33-34 can also be treated in a similar manner, for example by moving the floor parts 1 in a direction across the longitudinal direction along needle-shaped feed nozzles and at least one sprinkler head.

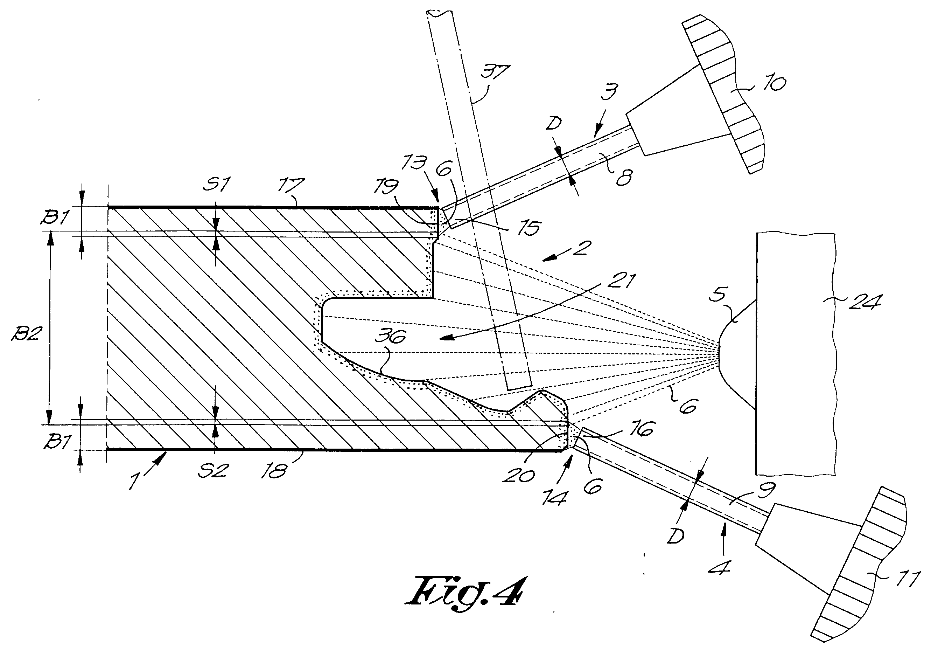

Figure 4 shows that the invention is also suitable for treating floor parts 1 with a more complicated shape of tooth 35 and groove 36.

Although the use of needle-shaped feed nozzles is preferably restricted to the formation of a lining, it is not excluded according to the invention to use additional needle-shaped feed nozzles, for example as is schematically represented in figure 4 with reference 37. Nor is it excluded to erect several sprinkler heads 5 on one side.

The invention also concerns a device 38 for treating sides 2-32-33-34 of floor parts 1, characterized in that it at least consists of the above-mentioned means to transport floor parts 1 over a certain path; needle-shaped feed nozzles 3-4 erected along this path; and one or several sprinkler heads 5 which are also erected along the above-mentioned path.

It is clear that this device 38 can be equipped with different accessories, such as for example the above-mentioned screening 28 or drying means, such as the above-mentioned device 31. Another useful accessory consists of an exhaust device 39 which provides for an extraction of excess sealing agent at the height of the sprinkler heads 5.

As is schematically represented in figure 1, the device 38 can be equipped with a device 40 with which gas under pressure is sprayed on the side of the floor parts 1 so as to obtain a good distribution of the sealing agent. The use of such a device 40 offers the advantage that a continuous process treatment remains possible, as opposed to for example in the case of a conventional high-pressure impregnation in a pressure room.

As is represented to a greater detail in figure 5, the device 40 preferably consists of one or several nozzles 41 to spray gas, such as compressed air, on the side concerned. Moreover, one or several extra nozzles 42 are preferably provided which make sure that no sealing agent ends up on the top side and/or bottom side of the floor part 1. The nozzles 42 are directed onto the top side and bottom side, such that sealing agent moving in the direction of these sides is blown away.

According to the embodiment of figure 1, the device 40 is preferably situated immediately after the needle-shaped feed nozzles 3-4. The nozzles 41 are directed onto the above-mentioned parts 19-20 in this case.

However, it is not excluded to provide the device 40 in other places, or to use additional similar devices, for example a similar device 43 which, as is represented in figure 1, is situated downstream of the sprinkler head 5.

The present invention is by no means restricted to the embodiments described as an example and represented in the accompanying drawings; on the contrary, such a floor part as well as the above-described method and device can be made in all sorts of variants while still remaining within the scope of the invention.

## Claims

1. Floor part, in particular a floor panel for forming a parquet floor or such, characterized in that it is treated with a sealing agent (6) on one or several sides (2-32-33-34).

2. Floor part according to claim 1, characterized in that the sealing agent (6) consists of a phenyl methane or at least contains a phenyl methane, in particular diisocyanate diphenylmethane.

3. Floor part according to claim 1 or 2, characterized in that the sealing agent (6) consists of modified di-isocyanate diphenylmethane or a product on the basis of modified di-isocyanate diphenylmethane.

4. Floor part according to any of the preceding claims, characterized in that it consists of a laminate structure with a core of MDF or HDF, either or not glued together in a waterproof manner.

5. Method for making a floor part according to any of claims 1 to 4, whereby the floor part (1) is first composed and whereby one or several sides (2-32-33-34) thereof are subsequently treated with the sealing agent (6), characterized in that at least a part of the sealing agent (6) is applied by means of at least one needle-shaped feed nozzle (3-4).

6. Method according to claim 5, characterized in that the sealing agent (6) is provided at least near the top edge (13) of the side (2-32-33-34) by means of such a needle-shaped feed nozzle (3), such that a lining of sealing agent (6) is formed.

7. Method according to claim 5 or 6, characterized in that the sealing agent (6) is provided at least near the bottom edge (14) of the side (2-32-33-34) by means of such a needle-shaped feed nozzle (4), such that a lining of sealing agent (6) is formed.

8. Method according to claim 5, 6 or 7, characterized in that needle-shaped feed nozzles (3-4) are used with an outflow opening (15-16) whose diameter (D) is smaller than or equal to 2 mm, and better still 1.6 mm.

9. Method according to any of claims 5 to 8, characterized in that needle-shaped feed nozzles (3-4) are used with an outflow opening (15-16) having a flattened section, in particular in the shape of an ellipse, oval or such.

10. Method according to any of claims 5 to 9, characterized in that the width (B1) of every part (19-20) of the surface of the side (2-32-33-34) which is treated via such a needle-shaped feed nozzle (3-4) is limited to maximally 2 mm.
